# EUROPÄISCHE PATENTSCHRIFT

(11) **EP 1 722 125 B1**
(45) Veröffentlichungstag und Bekanntmachung des Hinweises auf die Patenterteilung: **05.03.2008**
(21) Anmeldenummer: 06008475.3
(22) Anmeldetag: 25.04.2006
(51) Int. Cl.: F16F 9/54

(54) **Anschlussorgan an eine Stange**
Connecting element for a rod
Elément d'attachement pour une tige

(30) Priorität: 11.05.2005 DE 102005021764
(43) Veröffentlichungstag der Anmeldung: 15.11.2006
(73) Patentinhaber: ZF FRIEDRICHSHAFEN AG, 88046 Friedrichshafen (DE)
(72) Erfinder: Gubitz, Holger, 97422 Schweinfurt (DE); Graf, Ingbert, 97520 Röthlein (DE)

(56) Entgegenhaltungen:
- EP-A- 0 884 501
- DE-A1- 10 344 951
- DE-A1- 19 805 218
- DE-B- 1 016 067
- GB-A- 2 075 630
- US-A1- 2002 118 997
- US-A1- 2005 087 413

## Beschreibung

Die Erfindung betrifft ein Anschlussorgan an eine Kolbenstange entsprechend dem Oberbegriff von Patentanspruch 1.

Aus der DE 30 49 562 A1 ist ein Schwingungsdämpfer bekannt, der an seiner Kolbenstange ein gabelförmiges Anschlussorgan aufweist. Das gabelförmige Anschlussorgan verfügt über eine Grundplatte, die zwei parallele Laschen trägt, in denen Queröffnungen für einen Befestigungsbolzen ausgeführt sind. Die Grundplatte verfügt über eine Gewindebohrung, die mit einem Gewindezapfen der Kolbenstange in Eingriff gebracht werden kann. Für die Gewindebohrung muss die Grundplatte über eine größere Materialstärke verfügen, da ansonsten beim Herstellen der parallelen Laschen ein Verzug in der Grundplatte zu einer tendenziell ovalen Kernbohrung führt, der das Einschneiden des Gewindes unmöglich machen würde, bzw. das Gewinde unbrauchbar wäre.

Eine erste Überlegung bestand darin, dass man die Grundplatte des Anschlussorgans auf die Kolbenstange schweißt. Die von dem Anschlussorgan aufzunehmenden Kräfte, insbesondere in Querrichtung, schlossen dieses Konstruktionsprinzip aus.

Des weiteren wurde daran gedacht, die Grundplatte mit einer Durchgangsöffnung zu versehen und eine ringförmige Schweißnaht zwischen der Grundplatte und einem Kolbenstangenzapfen auszuführen. Beispielhaft ist die Fig. 2 der US 2005/0087413 A1 zu nennen. Das Problem besteht jedoch darin, dass die Laschen einen derart kleinen Abstand aufweisen, so dass kein Schweißwerkzeug ansetzbar ist.

Aus der JP (A) 2000-264272 ist es bekann, bei ener Schweißverbindung zwischen zwei Blechteilen eine der Schweißnaht gegenüberliegende Rückseite mit einem Korrosionsanstrich zu versehen, damit der Kontaktberreich zwischen den Blechteilen geschützt ist.

Alternativ wird in der JP (A) 2000-280068 ein Füllstoff vorgeschlagen, der einen korrsionsgefährdeten Bereich zwischen zwei Bauteilen schützt.

Aufgabe der vorliegenden Erfindung ist es, ein Anschlussorgan an eine Kolbenstange zu realisieren, die große Kräfte übertragen kann und dauerhaltbar ist.

Erfindungsgemäß wird die Aufgabe durch die Merkmale des Patentanspruchs 1 gelöst.
Der große Vorteil besteht darin, dasss eine Schweißnaht an einer Stelle des Anschlussorgans plaziert werden kann, die für ein Schweißwerkzeug gut zugänglich ist. Um zu verhindern, dass sich in dem Ringspalt der Durchgangsöffnung Feuchtigkeit sammelt und Korrosion auftritt, wird der Dichtring eingesetzt.

Des Schweißung kann unabhängig von der Kolbenstange ausgeführt werden, die in der Anwendung bei einem Schwingungsdämpfer eine sehr empfindliche Oberfläche aufweist und deshalb geschützt werden muss.

Gemäß einem vorteilhaften Unteranspruch weist die Gewindehülse einen Tragflansch für die Grundplatte auf. Für das Anschlussorgan steht eine vergrößerte Abstützfläche zur Verfügung. Bei einer Kehlnaht zwischen dem Tragflansch der Gewindehülse und der Grundplatte des Anschlussorgan steht ein größerer Durchmesser und damit eine länge Schweißnaht zur Verfügung, die höher belastbar ist.

Zur exakten Positionierung auf Erzeugung einer Vorspannung ist in der Gewindehülse eine Ringnut für den Dichtring eingearbeitet.

Des weiteren weist die Gewindehülse eine Aufweitschräge für den Dichtring auf.

Es ist vorgesehen, dass der Dichtring einen kreisförmigen Querschnitt aufweist. Bei der Montage kann der Dichtring einfach auf die Gewindehülse gefädelt werden, ohne dass auf eine besondere Orientierung geachtet werden muss.

Anhand der folgenden Figurenbeschreibung soll die Erfindung näher erläutert werden.

Es zeigt:
- Fig. 1: Anschlussorgan an einer Luftfeder
- Fig. 2: Seitenansicht mit Schnittdarstellung des Anschlussorgan
- Fig. 3: Vorderansicht zur Fig. 2

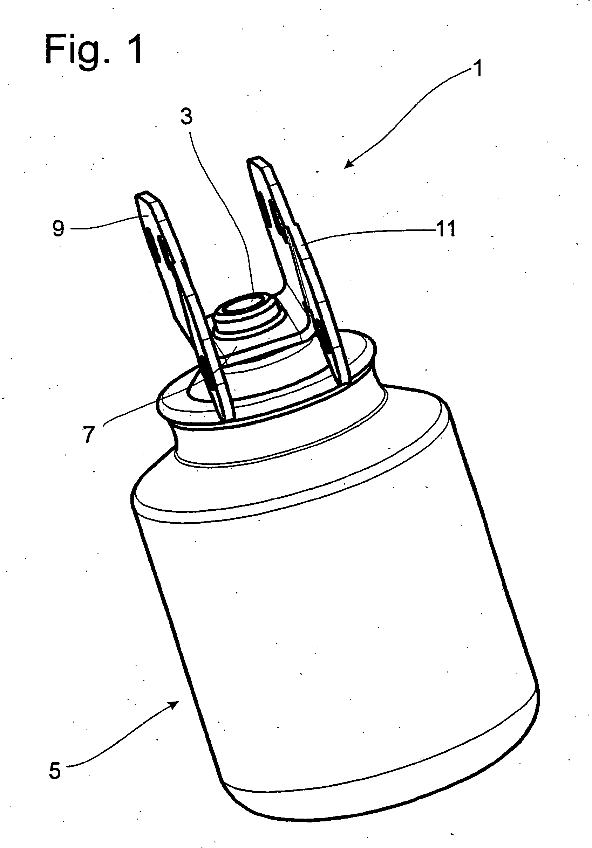

Die Fig. 1 zeigt ein Anschlussorgan 1 an einer Kolbenstange 3 einer Luftfeder 5. Der prinzipielle Aufbau einer Luftfeder wird als bekannt vorausgesetzt. Eine derartige Luftfeder wird z. B. für Fahrzeugachsen und Fahrerhauslagerungen eingesetzt. Entsprechend große Kräfte müssen von der Luftfeder aufgenommen werden.

Das Anschlussorgan verfügt über eine Grundplatte 7, die einteilig mit zwei parallelen Laschen 9; 11 ausgeführt ist. Ggf. kann das Anschlussorgan auch topfförmig geformt sein.

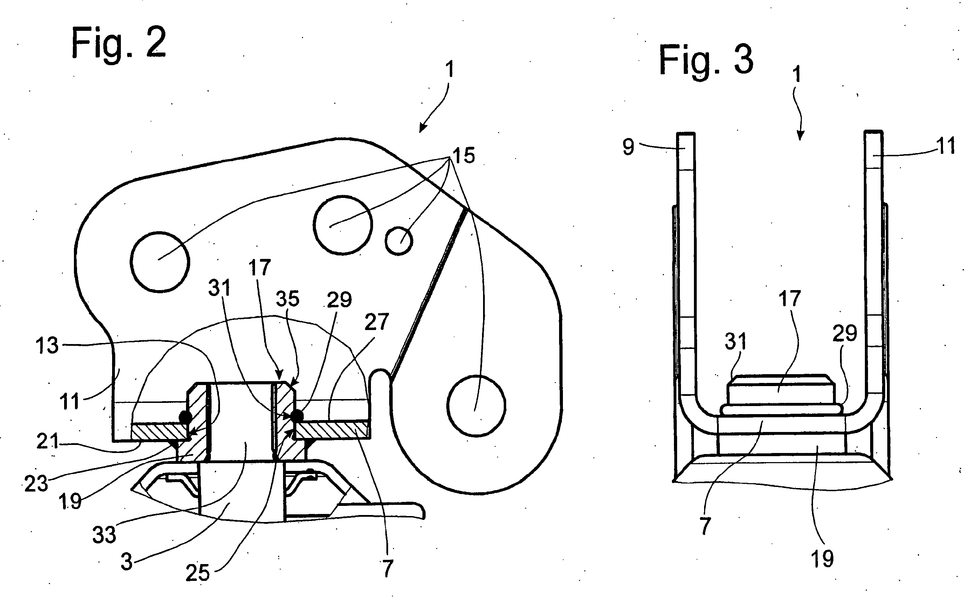

Die Zusammenschau der Fig. 2 und 3 zeigt eine Vergrößerung des Anschlussorgans 1. In der Grundplatte 7 ist eine Durchgangsöffnung 13 ausgeführt, die die Kolbenstange 3, z. B. die Kolbenstange eines Schwingungsdämpfers, aufnimmt. In den Laschen 9; 11 sind Durchgangsöffnungen 15 eingearbeitet, die zur Befestigung von nicht dargestellten Streben oder Bolzen dienen. Die Durchgangsöffnungen 15 müssen präzise zur Durchgangsöffnung 13 hergestellt werden, um eine günstige Krafteinleitung auf die Kolbenstange 3 zu gewährleisten. Deshalb wird das Anschlussorgan aus einer Blechplatine gefertigt, die sämtliche Durchgangsöffnungen aufweist. Danach werden die Laschen umgebogen. Abschließend wird die Durchgangsöffnung 13 nachgestanzt, um eine exakt runde Körperkontur zu erreichen.

In der Durchgangsöffnung 13 ist eine Gewindehülse 17 eingeschweißt. Die Gewindehülse weist einen Tragflansch 19 auf, der an einer Unterseite 21 der Grundplatte 7 anliegt. Als-Befestigungsmittel zwischen dem Anschlussorgan und der Gewindehülse, über die das Anschlussorgan mit der Stange in Wirkverbindung steht, dient eine Kehlnaht 23 zwischen dem Tragflansch und der Unterseite 21 der Grundplatte, die für eine Schweißvorrichtung gut zugänglich ist. Diese Schweißnaht wird getrennt von der Luftfeder ausgeführt, damit keinesfalls Spritzer einen Schaden anrichten können.

Die Durchgangsöffnung 13 bildet mit der Gewindehülse einen Ringspalt 25, der von einem auf einer der Schweißnaht 23 abgewandten Oberseite 27 der Grundplatte 7 angeordnetem Dichtring 29 verschlossen wird.

Der Dichtring 29 weist einen kreisringförmigen Querschnitt auf und ist in einer Ringnut 31 der Gewindehülse gegen die Oberseite 27 der Grundplatte 7 vorgespannt. Zur leichteren Montage des Dichtrings 29 verfügt die Gewindehülse über eine Aufweitschräge 35, so dass die Dichtung sehr leicht in die Ringnut 31 bewegt werden kann. Das Anschlussorgan 1 kann unabhängig von der Luftfeder hergestellt werden.

In einem letzten Fertigungsschritt wird das Anschlussorgan 1 auf die Stange 3 geschraubt, die einen Gewindeansatz 33 für die Gewindehülse 17 aufweist. Die im rauhen Alltagsbetrieb anfallende Feuchtigkeit erreicht zwar das Anschlussorgan, dessen Oberfläche korrosionsgeschützt ist, kann jedoch nicht in den Ringspalt 25 eindringen, da der Dichtring 29 dieses verhindert.

## Patentansprüche

1. Anschlussorgan (1) an eine Kolbenstange (3), umfassend eine Grundplatte (7) mit einer Durchgangsöffnung (13), wobei die Durchgangsöffnung (13) die Kolbenstange (3) aufnimmt und das Anschlussorgan (1) über Befestigungsmittel mit der Kolbenstange in Wirkverbindung steht und
ausgehend von der Grundplatte (7) zwei Laschen (9; 11) aufweist, **dadurch gekennzeichnet dass** als Befestigungsmittel in einer Durchgangsöffnung (13) der Grundplatte (7) eine Gewindehülse (7) zur Kolbenstange (3) eingeschweißt ist, wobei mindestens eine Schweißnaht (21) zwischen der Gewindehülse (7) und der Grundplatte (7) vorgesehen ist, die auf der den Laschen abgewandten Unterseite (21) der Grundplatte (7) ausgeführt ist und ein Dichtring (29) auf der der Schweißnaht (21) abgewandten Oberseite (27) der Grundplatte (7) einen Ringspalt (25) an der Durchgangsöffnung (13) verschließt.

2. Anschlussorgan nach Anspruch 1,
**dadurch gekennzeichnet,**
**dass** die Gewindehülse (17) einen Tragflansch (23) für die Grundplatte (7) aufweist.

3. Anschlussorgan nach Anspruch 1,
**dadurch gekennzeichnet,**
**dass** in der Gewindehülse (17) eine Ringnut (31) für den Dichtring (29) eingearbeitet ist.

4. Anschlussorgan nach Anspruch 1,
**dadurch gekennzeichnet,**
**dass** die Gewindehülse (17) eine Aufweitschräge (35) für den Dichtring (29) aufweist.

5. Anschlussorgan nach Anspruch 1,
**dadurch gekennzeichnet,**
**dass** die Dichtring (29) einen kreisförmigen Querschnitt aufweist.

## Claims

1. Connecting element (1) for a piston rod (3), comprising a base plate (7) having a through opening (13), the through opening (13) receiving the piston rod (3) and the connecting element (1) being operatively connected to the piston rod via fastening means and, emanating from the base plate (7), having two lugs (9; 11), **characterized in that** a threaded sleeve (7) is welded as fastening means to the piston rod (3) in a through hole (13) of the base plate (7), at least one welded seam (21) being provided between the threaded sleeve (7) and the base plate (7), which welded seam (21) is made on that underside (21) of the base plate (7) which faces away from the lugs, and a sealing ring (29) closing an annular gap (25) at the through opening (13) on that upper side (27) of the base plate (7) which faces away from the welded seam (21).

2. Connecting element according to Claim 1, **characterized in that** the threaded sleeve (17) has a carrying flange (23) for the base plate (7).

3. Connecting element according to Claim 1, **characterized in that** an annular groove (31) for the sealing ring (29) is machined into the threaded sleeve (17).

4. Connecting element according to Claim 1, **characterized in that** the threaded sleeve (17) has a widening bevel (35) for the sealing ring (29).

5. Connecting element according to Claim 1, **characterized in that** the sealing ring (29) has a circular cross section.

## Revendications

1. Élément d'attachement (1) pour une tige de piston (3), comprenant une plaque de base (7) avec une ouverture de passage (13), sachant que l'ouverture de passage (13) reçoit la tige de piston (3) et que l'élément d'attachement (1) est fonctionnellement relié à la tige de piston via des moyens de fixation et présente deux pattes (9 ; 11) partant de la plaque de base (7), **caractérisé en ce que**, comme moyen de fixation, une douille filetée (17) est soudée en direction de la tige de piston (3) dans une ouverture de passage (13) de la plaque de base (7), sachant qu'au moins un joint de soudure (21) est prévu entre la douille filetée (17) et la plaque de base (7), joint qui est réalisé sur le côté inférieur (21) de la plaque de base (7) qui est opposé aux pattes, et qu'un joint d'étanchéité annulaire (29) ferme, sur le côté supérieur (27) de la plaque de base (7) qui est opposé au joint de soudure (21), une fente annulaire (25) sur l'ouverture de passage (13).

2. Élément d'attachement selon la revendication 1, **caractérisé en ce que** la douille filetée (17) présente une bride porteuse (23) pour la plaque de base (7).

3. Élément d'attachement selon la revendication 1, **caractérisé en ce qu'**une rainure annulaire (31) pour le joint d'étanchéité annulaire (29) est ménagée dans la douille filetée (17).

4. Élément d'attachement selon la revendication 1, **caractérisé en ce que** la douille filetée (17) présente un biais d'élargissement (35) pour le joint d'étanchéité annulaire (29).

5. Élément d'attachement selon la revendication 1, **caractérisé en ce que** le joint d'étanchéité annulaire (29) présente une section circulaire.
